# EUROPEAN PATENT SPECIFICATION

(11) **EP 3 931 810 B1**
(45) Date of publication and mention of the grant of the patent: **27.03.2024**
(21) Application number: 20763697.8
(22) Date of filing: 25.02.2020
(51) Int. Cl.: G08B 19/02, B60W 40/06, G08G 1/16, B60T 8/172, G06V 10/143, G06V 20/56

(54) **METHOD AND ARRANGEMENT FOR DETERMINING A CONDITION OF A ROAD SURFACE BY SUPERPOSING IMAGES OF NIR CAMERA AND RGB SENSOR**
VERFAHREN UND ANORDNUNG ZUR BESTIMMUNG EINES ZUSTANDES EINER STRASSENOBERFLÄCHE DURCH ÜBERLAGERUNG VON BILDERN EINER NIR-KAMERA UND EINES RGB-SENSORS
PROCÉDÉ ET AGENCEMENT POUR DÉTERMINER UN ÉTAT D'UNE SURFACE DE ROUTE PAR SUPERPOSITION D'IMAGES D'UNE CAMÉRA IRP ET D'UN CAPTEUR RVB

(30) Priority: 28.02.2019 SE 1950262
(43) Date of publication of application: 05.01.2022
(73) Proprietor: Klimator AB, 411 33 Göteborg (SE)
(72) Inventor: CASSELGREN, Johan, 975 92 Luleå (SE)
(74) Representative: Westpatent AB
(86) International application number: PCT/SE2020/050212
(87) International publication number: WO 2020/176029

(56) References cited:
- EP-A1- 3 299 993
- EP-A2- 0 898 148
- EP-A2- 1 635 163
- WO-A2-2005/072358
- SE-L- 9 904 665
- US-A1- 2009 078 870
- US-A1- 2013 103 274
- US-A1- 2013 141 577
- US-A1- 2015 367 855
- US-A1- 2017 072 834
- US-A1- 2018 095 034
- US-A1- 2018 321 142
- CHEN YULU LUKE ET AL: "Inexpensive Multimodal Sensor Fusion System for Autonomous Data Acquisition of Road Surface Conditions", IEEE SENSORS JOURNAL, IEEE, USA, vol. 16, no. 21, 21 November 2016 (2016-11-21), - 31 December 2016 (2016-12-31), pages 7731-7743, XP011624254, ISSN: 1530-437X, DOI: 10.1109/JSEN.2016.2602871 [retrieved on 2016-09-28]

## Description

### TECHNICAL FIELD

The invention relates to a method for determining a classification of a condition of a road surface for vehicle traffic, said method comprising: defining a reference surface of said road surface ahead of the vehicle; illuminating said reference surface with at least one light source positioned on the vehicle; detecting light which is reflected off said reference surface; and determining said classification of the condition of the road surface by analyzing detected information related to said reference surface An example of a road surface classification system is described in EP3299993.

The invention also relates to an arrangement for determining a classification of a condition of a road surface for vehicle traffic and within a reference surface of said road surface ahead of the vehicle, said arrangement comprising at least one light source positioned on said vehicle and being configured for illuminating said reference surface; a sensor for detecting light which is reflected off said reference surface; said arrangement being configured for determining said classification of the condition of the road surface by analyzing detected information related to said reference surface.

The invention can be used for different types of measurement systems for determining the condition of a particular road, suitably but not exclusively intended to be arranged in vehicles.

### BACKGROUND

In the field of road vehicle safety, there is a need for accurate information regarding the condition of various road surfaces on which vehicles are travelling. For example, it is of high importance to determine a classification of a particular road surface, i.e. whether the road surface is dry or whether it is covered with ice, snow or water, or a mixture of such conditions. In this manner, drivers of vehicles can be informed of the condition of the roads on which they intend to travel. Such information is crucial in order to minimize road accidents due to, for example, slippery road surface conditions.

For this reason, there exists a requirement to detect several types of road conditions, for example dry, wet, snowy and icy surface, on a given road surface. It is also known that several different road conditions may occur at the same time on a particular road. For example, the road may have dry wheel tracks and at the same time snow or ice in a middle section of the road. For this reason, there is a demand to provide a classification of the complete road condition which covers the entire road.

In summary, any given road section may have areas which are covered for example with snow or ice in some areas and which are dry in other areas. Such information may be important in order to provide more accurate data related to the road surface condition, i.e. in order to improve road safety.

It is particularly important to be able to detect any occurrence of so-called black ice on a road surface, i.e. clear ice which is normally transparent so that the road surface can be seen through the ice layer. There is a particularly high risk for skidding on such black ice.

It is known to use optical characteristics of a road surface to provide a classification of its condition. More precisely, the intensity of light radiation which is scattered from the road surface varies depending on the condition of the road surface. For example, there is a difference between scattering of light from a dry asphalt surface and from the same surface but covered with water or ice. This is due to the fact that dry asphalt, or asphalt covered with snow, is normally a rough surface whereas asphalt covered with water or ice is normally a smooth surface. In this way, it is possible to distinguish between dry asphalt and asphalt covered with ice or water based on light intensity.

Classification can be made based on absorption and scattering properties of the road surfaces and the materials involved. Such classification can be carried out by means of systems for measuring the light intensities of the relevant wavelengths.

Information regarding the condition of a road surface can be used in order to establish the friction of the road surface, i.e. the tire to road friction, which in turn can be used for determining, for example, the required braking distance of a vehicle during operation. This type of information is important both as regards vehicles such as cars and motorcycles, and also for commercial vehicles such as heavy transport vehicles, buses and other types of commercial and private vehicles, in order to be able to travel on such road surfaces in a safe manner.

By using updated information related to the road condition, improvements in traffic safety as well as accurate predictions of the condition of different types of road surfaces can be obtained.

In order to solve the above-mentioned requirements, it is today known to use systems and methods for determining the condition of a road surface intended for vehicle traffic. Such known systems and methods include a process of determining the road condition associated with a road surface, which can be obtained by means of a suitable road condition sensor arranged on a vehicle. For example, it is known to use an NIR camera ("near infrared" camera) for this purpose. In this manner, a classification of the road condition can be achieved, in particular for determining whether the road in question is covered with ice, snow or whether it is dry.

Even though the arrangements according to the prior art are configured for detecting different types of road conditions, there is still a need for improvements within this field of technology. In particular, there is a desire to provide a method and arrangement for methods and arrangements for determining the road condition which are more accurate and precise and which may be used to obtain information in a more detailed manner regarding the road surface to be travelled than what is previously known.

### SUMMARY

Consequently, an object of the invention is to provide an improved method and arrangement which solves the above-mentioned problems associated with previously known solutions and which offers improvements in the field of determining the condition of a particular road surface. In particular, there is a requirement to be able to detect black ice on a road surface.

The above-mentioned object is achieved by a method for determining a classification of a condition of a road surface for vehicle traffic, said method comprising: defining a reference surface of said road surface ahead of the vehicle; illuminating said reference surface with at least one light source positioned on the vehicle; detecting light which is reflected off said reference surface; and determining said classification of the condition of the road surface by analyzing detected information related to said reference surface. Furthermore, the method comprises the following steps: illuminating said reference surface by means of laser light; providing image information related to said reference surface by detecting said reflected light by means of an NIR camera; providing further image information related to said reference surface by scanning said reference surface by means of an RGB sensor; and determining said classification of the road surface by superposing image information related to said reference surface from said NIR camera and said RGB sensor.

By means of the invention, certain advantages are obtained. Firstly, it should be noted that the fact that image information from the NIR camera and the RGB sensor, respectively, leads to improved detection having higher accuracy and improved resolution, as compared with previously known systems. This means that the detection of the road condition in question has higher reliability than known method. In particular, the detection has improved contrast through the use of an RGB sensor in combination with an NIR camera. This leads to an increased accuracy and consequently to improvements as regards road safety.

According to an embodiment, the method comprises: defining a first image of said road surface by means of the information provided by said NIR camera; defining a second image of said road surface by means of the information provided by said RGB sensor; and defining a combined image by superposing the first and second images.

According to a further embodiment, the method comprises a step of providing said first image by means of detected information regarding radiation reflected off the road surface within a predetermined wavelength interval.

According to an embodiment, the method comprises a step of providing said second image by means of detected information regarding edges and contours and similar visual properties relating to the road surface.

According to a further embodiment, the method comprises a step of modelling laser light from said light source in the form of either a laser light point or a laser line.

According to an embodiment, the method further comprises a step of determining a road surface condition selected from at least one of the following: a dry and non-covered road surface; a road surface which is covered with water; a road surface which is covered with snow; and a road surface which is covered with ice.

According to a further embodiment, the method comprises a step of identifying, by means of said image data, one or more of the following road area sections: a left side lane; a right side lane; a left wheel track; a right wheel track; and a middle road section.

According to an embodiment, the method comprises a step of determining said road condition by using measurements of further operational conditions related to said vehicle.

The invention is particularly useful within the field of autonomous vehicles, i.e. vehicles being equipped with sensors and control systems and being configured for navigating such vehicles along a route in an autonomous manner. The invention may be used for providing accurate information regarding the road friction in different road areas, which is crucial in particular for autonomous vehicles since the steering and braking function of such a vehicle is dependent on the tire to road friction in all parts of a road surface which is travelled.

The above-mentioned object is also achieved by means of an arrangement for determining a classification of a condition of a road surface for vehicle traffic and within a reference surface of said road surface ahead of the vehicle, said arrangement comprising at least one light source positioned on said vehicle and being configured for illuminating said reference surface; a sensor for detecting light which is reflected off said reference surface; said arrangement being configured for determining said classification of the condition of the road surface by analyzing detected information related to said reference surface. Furthermore, the arrangement comprises a laser light unit for illuminating said reference surface, an NIR camera for providing image information related to said reference surface by detecting said reflected light, an RGB sensor for providing further image information related to said reference surface by scanning said reference surface by means of an RGB sensor; and a control unit for determining said classification of the road surface by superposing image information related to said reference surface from said NIR camera and said RGB sensor.

The invention can be applied in different types of vehicles, such as cars, trucks, and buses.

Further advantages and advantageous features of the invention are disclosed in the following description and in the dependent claims.

### BRIEF DESCRIPTION OF THE DRAWINGS

Further objects, features, and advantages of the present disclosure will appear from the following detailed description, wherein certain aspects of the disclosure will be described in more detail with reference to the accompanying drawings, in which:
- Fig. 1: shows a simplified side view of a vehicle being driven on a road surface and being arranged in accordance with the present disclosure;
- Fig. 2: shows a view of a road surface as regarded from a driver's point view, i.e. from which the road surface is observed;
- Fig. 3: is a view of a first image as provided in accordance with the disclosure;
- Fig. 4: is a view of a second image as provided in accordance with the disclosure; and
- Fig. 5: is a simplified flow chart describing the method according to the disclosure.

### DETAILED DESCRIPTION

Different embodiments of the present invention will now be described with reference to the accompanying drawings. The arrangements described below and defined in the appended claims can be realized in different forms and should not be construed as being limited to the embodiments described below.

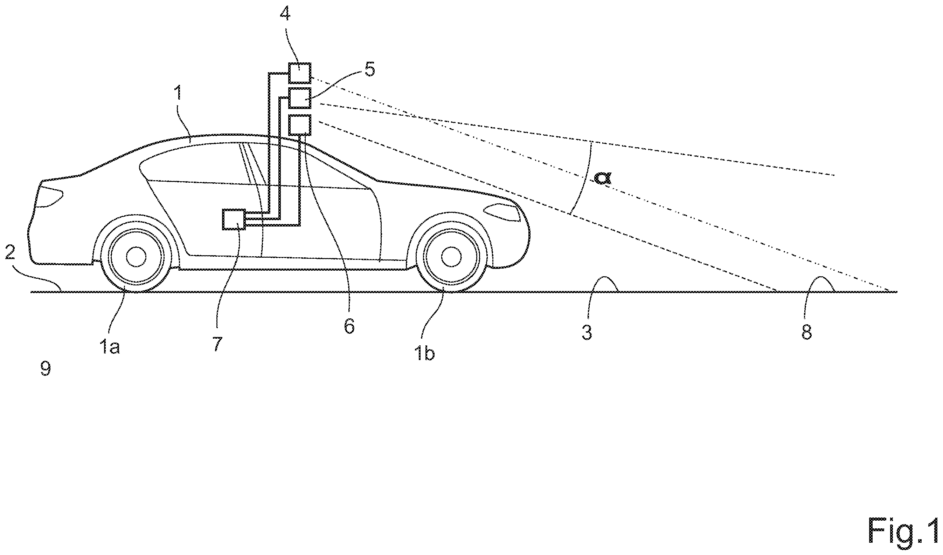

With initial reference to Fig. 1, there is shown a simplified side view of a vehicle 1 such as a conventional car which has four wheels (of which two wheels 1 a, 1b are visible in Fig. 1) and is being driven along a road 2 having a road surface 3, i.e. a top surface of the road 2 having a certain structure and causing a certain friction relative to the wheels 1a, 1b. According to different examples, the road surface 3 can be in the form of asphalt, concrete, gravel, sand, dirt, grass or generally any form of surface which can be used for vehicle traffic.

In the embodiments below, it is assumed that the road surface 3 is constituted by asphalt.

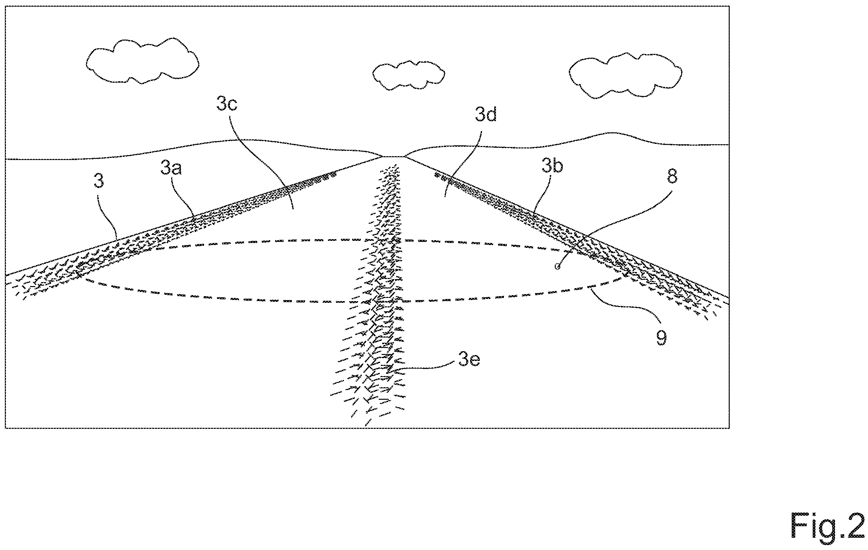

This disclosure is based on a requirement to determine a classification of a condition of the road surface 3. In particular, there is a need to determine which condition or conditions are present across the entire width of the road 2. As discussed initially, and as described in Fig. 2 which is a view of the road surface 3 as seen from a driver's seat in the vehicle 1, the road surface 3 may be regarded along its width and comprises two side lanes 3a, 3b, two wheel tracks 3c, 3d and a centre section 3e, i.e. a strip in the middle of the road surface 3. Depending on the weather, and in particular depending on whether there is a winter climate, the side lanes 3a, 3b and the centre section 3e may be covered for example with snow, whereas the wheel tracks 3c, 3d may be dry. This is indicated in a simplified form in Fig. 2. This also means that the driver may drive the vehicle 1 relatively safely on the dry wheel tracks 3c, 3d since there is a relatively high friction between the vehicle wheels 1a, 1b and the wheel tracks 3c, 3d. On the other hand, if the vehicle 1 should be driven on the side lanes 3a, 3b or the centre section 3e, there is a much higher risk for slippery road conditions since these sections 3a, 3b, 3e are covered with snow.

The purpose of Fig. 2 is to indicate in a simplified manner an example in which the wheel tracks 3c, 3d are dry and not covered with any ice, snow or water, whereas the side lanes 3a, 3b are covered with snow.

In order to determine the road condition for the entire road surface 3, i.e. for all the road sections 3a-3e, the vehicle 1 is equipped with an arrangement comprising a laser light unit 4, an NIR ("near infrared") camera 5 and an RGB camera 6, as shown in Fig. 1. The purpose of the laser light unit 4 is to generate laser light which is used to illuminate the road surface 3. According to an embodiment, the laser light unit 4 should be adapted to an NIR camera, i.e. being configured for a wavelength which is within an interval of approximately 900-2000 nm.

The NIR camera 5 comprises a number of NIR sensors which are configured to detect and capture image data in the near infrared spectrum, i.e. within a portion of the electromagnetic spectrum which is adjacent to the visible range of wavelengths. An NIR camera is particularly useful for example for applications with poor light conditions and for monitoring traffic and road conditions in connection with the method according to this disclosure.

Furthermore, the RGB camera 6 comprises an image sensor of generally conventional type, i.e. which is arranged for sensing and capturing image information. One suitable type of image sensor is the so-called CMOS sensor. The image information is provided in accordance with the so-called RGB colour model based the principle that red, green and blue light is combined in order to produce a large number of colours. The technology related to today's RGB sensors is well-known, and for this reason it is not described in further detail here.

With reference to Fig. 1, it can be noted that the laser light unit 4, the NIR camera 5 and the RGB camera 6 are connected to a control unit 7, which is configured to control the operation of the laser light unit 4, the NIR camera 5 and the RGB sensor 6 as will be described below. The control unit 7 is also configured to receive image information from the NIR camera 5 and the RGB camera 6 and for treating said information in order to generate information regarding the condition of the road surface 3.

The laser light unit 4 is based on a laser emitter device which is configured for generating a beam of modulated laser light towards the road surface 3 during operation of the vehicle 1. More precisely, the laser light unit 4 is arranged so as to strike the road surface 3 at a confined area, i.e. a laser reference area 9, as shown in Fig. 2. According to an embodiment, the laser light unit 4 is arranged to generate laser light in the form of a measurement spot 8, as shown in Fig. 2. In this manner, the laser light unit 4 can be used for covering the entire laser reference area 9 in order to illuminate the road surface 3 within this particular area 9.

The disclosure is not limited to an embodiment in which one single laser light unit is used for illuminating the road surface 3. According to further embodiments, two or three such laser light units can be used.

The laser light which strikes the road surface 3 will be reflected off the road surface 3 and will be scattered in different directions. A certain amount of the reflected light will be detected by the NIR camera 5. The scattering of light from the road surface 3 and the absorption of light by the road surface 3 varies depending on the wavelength of the light and on the condition of the road surface 3a. This means that the road condition can be determined by measuring the light intensity as a function of the wavelength.

The NIR camera 5 is arranged to capture image information within a wavelength interval which is adapted to the emitted light from the laser light unit 4. According to different embodiments, the wavelength can be chosen to be 980 nm, 1550 nm or 1940 nm.

In order to ensure reliable and accurate detection of various road conditions along the road surface 3, and in order to provide a low sensitivity for surrounding light sources such as sunlight and light from other vehicles' headlights, the laser light can be modelled in a suitable manner. According to a first embodiment, the laser light is configured as a relatively small spot based on only a few pixels of light.

According to a second embodiment, the laser light is configured as a line of light which is arranged generally transversal to the road 2.

According to an embodiment, two laser light units are used. In such an embodiment, the laser light units can be modulated in a suitable manner, for example by switching each laser light unit on and off according to a predetermined modulation pattern.

The positioning of the laser light unit 4 is suitably chosen so that it is situated relatively high up on the vehicle 1. In this manner, the laser light unit 4 can be arranged so that the light strikes the road surface 3 ahead of the vehicle 1 and relatively close to the vehicle 1, and so that the intensity of the reflected light is sufficient for detecting by means of the NIR camera 5. The laser light unit 4 is suitably controlled so that the laser light strikes the road surface 3 approximately 2-5 meters ahead of the vehicle 1, depending for example on the power of the laser light unit 4.

Reflected laser light is measured using the NIR camera 5. Based on the detected signal, it can for example be determined whether the road surface is covered with ice or water.

According to an embodiment, NIR camera 5 is used for determining whether the road surface 3, i.e. each one of the road surface sections 3a-3e, has one of a number of possible road surface conditions. For example:
i) the road surface 3 may be dry and non-covered, i.e. which corresponds to a relatively warm and dry weather without any snow, ice or water which covers the road surface 3; or
ii) the road surface 3 may be covered with water, i.e. which can be the case just after a rainfall; or
iii) the road surface 3 may be covered with snow, which can be the case after a snowfall; or
iv) the road surface 3 may be covered with ice, i.e. in case that snow or water covering the road surface 3 has frozen to ice.

In addition to the above-mentioned four main types of road surface 3 coverings, the road surface 3 can be covered by combinations or mixtures of different types, for example a mixture of snow and water, i.e. sleet or slush, or a mixture of ice and water, i.e. a road surface covered with ice which in turn is covered with a layer of water. Furthermore, a particular type of covering is so-called black ice, i.e. clear ice which is generally transparent so that the road surface 3 can be seen through it.

In case of snow covering the road surface 3, the snow can be for example in the form of bright white snow, which corresponds to a case where snow has just fallen, or it can be grey or dark, which corresponds to a case where the snow has been covering the road surface 3 for a relatively long period of time so that it is dirty from pollution and other substances. Both these conditions are relevant when determining the friction of the road surface 3 and for determining for example whether the road surface condition requires caution for drivers travelling along such roads.

Furthermore, according to an embodiment, the vehicle 1 is equipped with the above-mentioned RGB sensor 6 for capturing digital images and storing image data related to said images for later analysis and image treatment. The RGB sensor 6 is arranged in the vehicle 1 so as to generate said image data within the above-mentioned reference surface 9 which is located ahead of the vehicle 1. The direction of scanning of the RGB sensor 6 defines a predetermined angle α with respect to a horizontal plane along which the road 2 is oriented.

The RGB sensor 6 is used to define a scanning window which corresponds to a digital image which is formed by an array of a large number of image pixels. The scanning window is configured so as to cover the road surface 3 ahead of the vehicle 1, as described in Fig. 2. The image pixels are arranged along a number of rows and columns which together form the scanning window. An image which is captured by the RGB sensor 6 is stored in a manner in which image data is registered for all the pixels of the image. According to an embodiment, the pixels of the image contains image data defined according to the so-called RGB colour system. This system can be used to define virtually all possible colours from a combination of red, green and blue colour components. In other words, each colour in the RGB colour system can be described by means of image data representing how much of the red, green and blue colour components which forms part of the colour in question. The red, green and blue components are defined as a number being defined, for example, by 8 bits each, thereby having number values extending from 0 to 255. For example, the colour black corresponds to a red value of 0, a green value of 0 and a blue value of 0, whereas the colour white corresponds to a red value of 255, a green value of 255 and a blue value of 255. A high number of further colours can be defined by all combinations of the red, green and blue values, each of which can extend between 0 and 255.

According to an embodiment, the RGB sensor 6 and the control unit 7 are configured for detecting the RGB colour code for each image pixel in its scanning window. This corresponds to the optical properties of the image in question. In this manner, the control unit 7 may differentiate between different areas of the road surface 3 by comparing RGB color codes for the pixels corresponding to the entire scanning window.

In particular, the RGB sensor 6 is arranged for scanning the entire transversal width of the road 2. Also, the image data generated by the RGB sensor 6 is combined with the image data generated by the NIR camera 5 so as to determine a classification of the condition of the entire road surface 3. This will be described in greater detail below.

As mentioned, the NIR camera 5 and the RGB sensor 6 are connected to the control unit 7 which is arranged for analyzing incoming sensor data so as to determine which road condition applies in each road section 3a-3e. In particular, the control unit 7 comprises stored software for digital image treatment which is used for treatment of the image data from the RGB sensor 6. Accordingly, the RGB sensor 6 is configured for detecting certain characteristics on the road surface 3 and for identifying elements in a particular scene. For example, transitions between different road sections such as for example an asphalt road area and an adjacent roadside with another surface covering, for example grass, can be detected. Also, the RGB sensor 6 can for example be used for distinguishing between side lanes covered with snow and dry wheel tracks. The RGB sensor 6 can also be used for recognizing other visual variations - such as edges and boundaries - in the scene which is represented by the road surface 3. Furthermore, the control unit 7 can be provided with software for example for filtering and enhancing image data from the RGB sensor 6 in order to contribute to an accurate image of the road surface 3. Also, the RGB sensor 6 can be used for detecting other obstacles in the vicinity of the road surface 3, such as for example other vehicles, bicycles and pedestrians.

Generally, the image treatment software used in the control unit 7 can be used for identifying different road area sections by recognizing optical properties related to brightness or colour, or positions of edges and borders, or pattern recognition, extraction of image features or other image treatment in the different road areas. In this manner, the different road area sections 3a-e can be separated and identified based on their optical properties, as detected through the image data contained in the images as captured by the RGB camera unit 6.

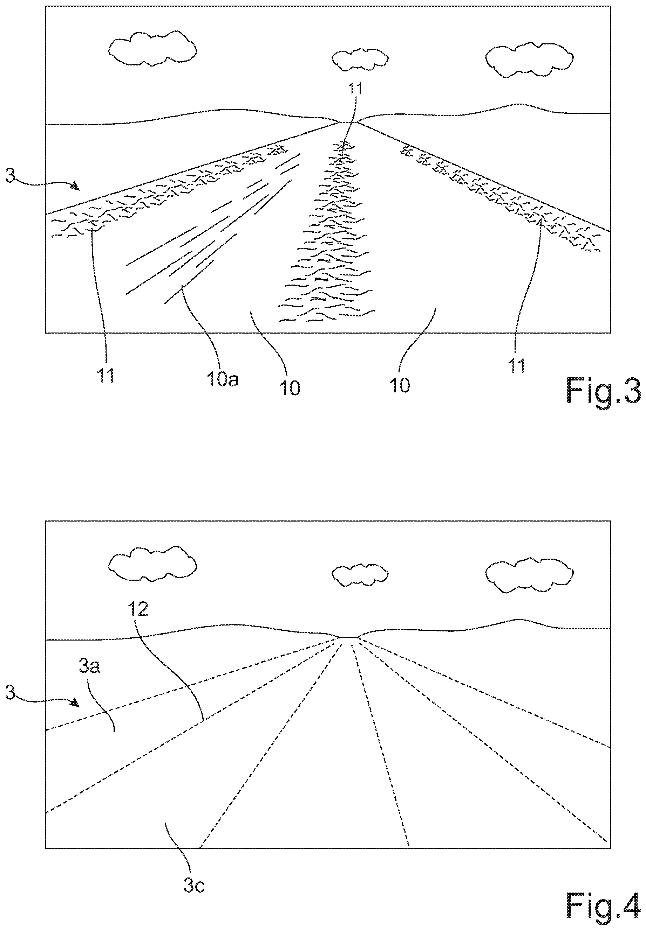

Through the use of image data from the RGB sensor 6 and digital image treatment in the control unit 7, a precise image of the road surface 3 can be defined (as will be further described below with reference to Fig. 4). For example, the boundaries and positions of the side lanes 3a, 3b, the wheel tracks 3c, 3d and the centre section 3e as shown in Fig. 2 can be identified. For example, an area which is analyzed as having a bright white colour can be expected to be covered with snow. Furthermore, an area which is analyzed as being relatively dark can be expected to a dry, non-covered area. Consequently, different areas having different optical properties can be detected and identified as different sections of the road 2 having particular road surface coverings and different road surface conditions.

Fig. 3 is a simplified view of an image produced by the NIR camera 5. According to an embodiment, the image consist generally of two different types of areas, i.e. a first type of area 10 which corresponds to dry asphalt (i.e. having a particular spectral response as a result of detection of reflected light by the NIR camera 5) and a second type of area 11 which corresponds to snow (i.e. having a further type of spectral response). The image in Fig. 3 is merely an example, and many other types of images can obviously occur depending on weather and other factors. As a further example of a road condition, an area of black ice 10a is also shown in Fig. 3. The term "black ice" is used to describe clear ice which is generally transparent so that the road surface 3 can be seen through it. As shown in Fig. 3, an area of black ice 10a is formed along the road and along the first area 10.

The image data which is captured by the NIR camera 5 corresponds to the detected light intensity resulting from reflections of the laser light from the laser light unit 4, as reflected in the road surface 3. The reflected laser light corresponds as such to a spectral response which in turn depends on the material of the road 3 and any material located on top of the road surface 3, such as ice, water or snow. This means that the NIR camera 5 can be used to detect and distinguish between different areas or sections of the road surface 3 having different road conditions. However, the boundaries between the different areas 10, 11 are not entirely sharp but can rather be described as continuous transitions, which makes it difficult to provide an accurate image of the entire road surface 3.

Fig. 4 is a simplified view of an image produced by the RGB sensor 6. As mentioned above, the RGB sensor 6 can be used for example for recognizing visual properties and variations along the road surface 3. As shown in Fig. 4, a transition or boundary 12 between a first side lane 3a and an adjacent wheel track 3c, for example, can be detected in a precise manner. Similar boundaries can be defined as regards different sections of the entire road surface 3.

The image from the NIR camera 5 and the image from the RGB sensor 6 are superposed by means of the control unit 7. This means that the combined information from the superposed images can be used for example to add information from the RGB sensor 6 image regarding edges and boundaries to the NIR camera 5 image. This superpositioning of image data from the NIR camera 5 and the RGB sensor 6 are suitably arranged as layers which are arranged on top of each other and which are aligned with each other as regards the position of the road surface 3 and its various sections and transitions. Such layered information can be displayed clearly on a computer screen so that the information from both the NIR camera 5 and the RGB sensor 6 is clearly visible at the same time and in an aligned manner. In this manner, higher accuracy, improved resolution and improved contrast as compared with previously known systems can be obtained. This leads to an increased accuracy and consequently to improvements as regards road safety.

In summary, the system and method shown in Figs. 1-4 is used for detecting light radiation which is reflected off the reference surface 9 as a result of incoming laser light. A classification of the condition of the road surface 3 can then be obtained by analyzing detected information related to said reference surface 9. More precisely, image information related to the reference surface 9 can be obtained by detecting said reflected light by means of the NIR camera 5 and further image information related to said reference surface 9 can be otained by scanning the reference surface 9 by means of the RGB sensor 6. Finally, a classification of the road surface 3 is obtained by superposing image information related to the reference surface 9 from the NIR camera 5 and the RGB sensor 6 as described above.

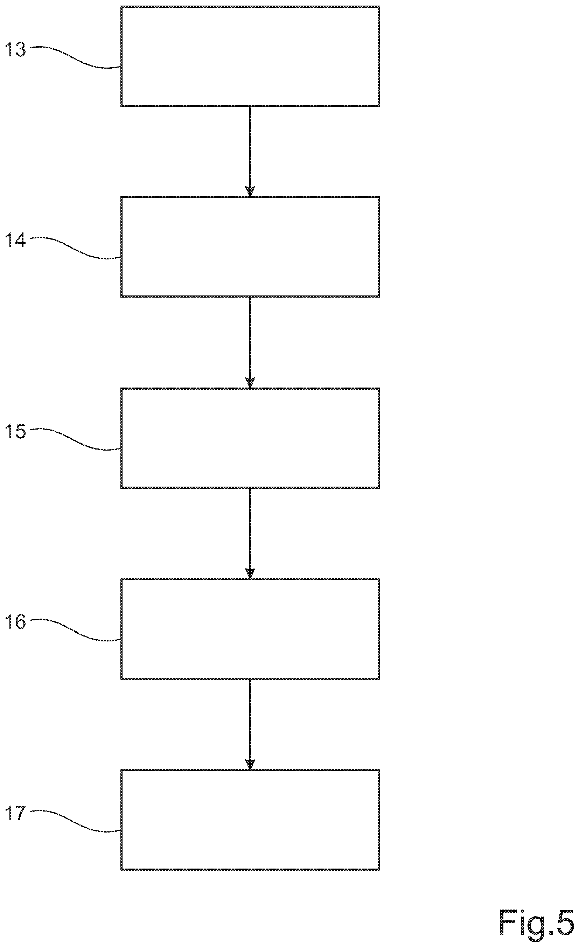

Fig. 5 is a simplified flow chart showing the operation of an embodiment of the invention. Initially, the laser light unit 4 is actuated (step 13 in Fig. 5) for generating light directed towards the reference surface 9. Next, the NIR camera 5 is actuated (step 14 in Fig. 5) so as to define a first image comprising information regarding the road surface condition. Next, the RGB sensor 6 is actuated (step 15) so as to define a further image comprising informaton regarding the road surface condition. Next, the two images are combined by superposing image information from the images as described above, and then treated in the control unit 7 (step 16) in order to provide a classification of the surface condition of the entire road surface 3 in question. Based on the optical properties in the road areas, assumptions are made in the control unit 7 so as to determine the road surface condition of the relevant road areas. Finally, information related to the road surface conditions is suitably also presented to the driver of the vehicle (step 17). For this reason, the control unit 9 may include means for informing the driver of the road condition, for example a display arranged in the vehicle's dashboard (not shown in the drawings).

As another option, the control unit 9 may be configured for transmitting information regarding the road surface condition to external companies, for example road freight companies. Such information can be of assistance for example when planning which routes to travel.

In addition, the classification of the road surface condition can be further improved using other means of measurements, data and parameters which relate to the operation and condition of the vehicle 1. For example, it can be determined whether the windshield wipers are actuated in the vehicle. In such case, it can be assumed that there is either snow or rain falling on the road surface 3. According to a further example, it can be detected whether an arrangement of anti-lock braking system (ABS) (not shown in the drawings) arranged in the vehicle 1 is actuated. In such case, it can be assumed that the friction between the wheels and the road surface is relatively low, which may be the result of ice or snow covering the road surface. Other units, such as a traction control system (TCS) or an electronic stability control (ESC) system, determining parameters relating to the operation of the vehicle, can be used in order to determine the road surface condition, i.e. to determine whether the road surface 3 is covered with ice, water, snow or whether it is dry. This information can also be used for providing information related to the friction of the road surface 3 and its sections.

The invention is not limited to the embodiments described above, but can be varied within the scope of the appended claims. For example, the invention is not limited to processing image data according to the RGB colour coding system. Another useful system is the so-called CMYK system, which is a subtractive colour system which uses four colours (cyan, magenta, yellow and black), which are normally used during colour printing. The CMYK system is based on a principle in which colours are partially or entirely masked on a white background.

Also, data related to the classification of the road surface condition can be associated with a time stamp and also with position data. In other words, information can be generated which indicates when and where the road surface condition was classified. This is particularly useful if said data is to be used in applications for example for generating maps with information relating to the road surface condition along certain roads on such maps. Such map-generating applications can for example be used in other vehicles, in order to present relevant road-related status information.

For example, other parameters than data from the NIR camera 5 and the RGB sensor 6 can be used. Such an example is data related to the temperature of the road surface 3, which can be crucial when determining for example the friction of the different road area sections 3a-e. As an example, if the NIR camera 5 indicates that the road surface condition (in the right wheel track 3d) corresponds to a "dry surface" and the RGB sensor 6 indicates that the middle road section 13 is darker than the right wheel track 12, it can be assumed that the middle road section 13 is covered with water. If a temperature sensor also indicates that the temperature is relatively low, possibly also that the temperature is rapidly decreasing over time, there may be a considerable risk for very slippery road conditions.

According to a further example, if the road condition sensor and the camera unit indicate that the wheel tracks are covered with water even though the temperature is below zero degrees Centigrade, it can be assumed that the wet road surface is the result of a use of road salt having been spread out on the road surface.

Furthermore, the camera sensor 6 can be used for generating image data also relating to the sky (see Fig. 2). This means that certain information relating to the weather, formation of clouds etc., can be used. As an example, if the road condition sensor and camera unit indicate that the wheel tracks are dry, i.e. non-covered, while at the same time the image data related to the sky 18 indicates a relatively dark colour, it can be expected that clouds occur in the sky 18 and that rain may fall (or possibly snow, depending on the temperature) further ahead on the road 3.

Also, the image data mentioned above can be data generated both in the form of still pictures and a video signal.

Finally, the inventive concept is not limited to use in vehicles such as cars, trucks and buses, but can be used in fixed, i.e. non-movable, monitoring stations for carrying out measurements in the same manner as explained above.

## Claims

1. Method for determining a classification of a condition of a road surface (3) for vehicle (1) traffic, said method comprising:
defining a reference surface (9) of said road surface (3) ahead of the vehicle (1);
illuminating said reference surface (9) with at least one light source (4) positioned on the vehicle (1);
detecting light which is reflected off said reference surface (9); and
determining said classification of the condition of the road surface (3) by analyzing detected information related to said reference surface (9);
**characterized in that** the method comprises the following steps:
illuminating said reference surface (9) by means of laser light;
providing image information related to said reference surface (9) by detecting said reflected light by means of an NIR camera (5);
providing further image information related to said reference surface (9) by scanning said reference surface (9) by means of an RGB sensor (6); and
determining said classification of the road surface (3) by superposing image information related to said reference surface (9) from said NIR camera (5) and said RGB sensor (6).

2. Method according to claim 1, wherein said method furthermore comprises:
defining a first image of said road surface (3) by means of the information provided by said NIR camera (5);
defining a second image of said road surface (3) by means of the information provided by said RGB sensor (6); and
defining a combined image by superposing the first and second images.

3. Method according to claim 1 or 2, wherein said method furthermore comprises:
providing said first image by means of detected information regarding radiation reflected off the road surface (3) within a predetermined wavelength interval.

4. Method according to any one of the preceding claims, wherein said method furthermore comprises:
providing said second image by means of detected information regarding edges and contours and similar visual properties relating to the road surface (3).

5. Method according to claim 1 or 2, wherein said method furthermore comprises:
modelling laser light from said light source (4) in the form of either a laser light point or a laser line.

6. Method according to any one of the preceding claims, wherein said method further comprises
determining a road surface condition selected from at least one of the following:
- a dry and non-covered road surface (3);
- a road surface (3) which is covered with water;
- a road surface (3) which is covered with snow; and
- a road surface (3) which is covered with ice.

7. Method according to any one of the preceding claims, further comprising:
identifying, by means of said image data, one or more of the following road area sections (3a, 3b, 3c, 3d, 3e):
a left side lane (3a);
a right side lane (3b);
a left wheel track (3c);
a right wheel track (3c); and
a middle road section (3e).

8. Method according to any one of the preceding claims, further comprising:
determining said road condition by using measurements of further operational conditions related to said vehicle (1).

9. Arrangement for determining a classification of a condition of a road surface (3) for vehicle (1) traffic and within a reference surface (9) of said road surface (3) ahead of the vehicle (1), said arrangement comprising at least one light source (4) positioned on said vehicle (1) and being configured for illuminating said reference surface (9); a sensor (5) for detecting light which is reflected off said reference surface (9); said arrangement being configured for determining said classification of the condition of the road surface (3) by analyzing detected information related to said reference surface (9); **characterized in that** said arrangement further comprises a laser light unit (4) for illuminating said reference surface (9), an NIR camera (5) for providing image information related to said reference surface (9) by detecting said reflected light, an RGB sensor (6) for providing further image information related to said reference surface (9) by scanning said reference surface (9) by means of an RGB sensor (6); and a control unit (7) for determining said classification of the road surface (3) by superposing image information related to said reference surface (9) from said NIR camera (5) and said RGB sensor (6).

10. A vehicle (1) comprising an arrangement for classification of a condition of a road surface (3) according to claim 9.

## Patentansprüche

1. Verfahren zum Bestimmen einer Klassifizierung eines Zustands einer Straßenoberfläche (3) für Fahrzeug(1)-Verkehr, das Verfahren umfassend:
Definieren einer Referenzoberfläche (9) der Straßenoberfläche (3) vor dem Fahrzeug (1);
Beleuchten der Referenzoberfläche (9) mit mindestens einer Lichtquelle (4), die auf dem Fahrzeug (1) positioniert ist;
Erfassen von Licht, das von der Referenzoberfläche (9) reflektiert wird; und Bestimmen der Klassifizierung des Zustands der Straßenoberfläche (3) durch Analysieren von erfassten Informationen, die sich auf die Referenzoberfläche (9) beziehen;
**dadurch gekennzeichnet, dass** das Verfahren die folgenden Schritte umfasst:
Beleuchten der Referenzoberfläche (9) mittels Laserlicht;
Bereitstellen von Bildinformationen, die sich auf die Referenzoberfläche (9) beziehen, durch Erfassen des reflektierten Lichts mittels einer NIR-Kamera (5);
Bereitstellen weiterer Bildinformationen, die sich auf die Referenzoberfläche (9) beziehen, durch Abtasten der Referenzoberfläche (9) mittels eines RGB-Sensors (6); und
Bestimmen der Klassifizierung der Straßenoberfläche (3) durch Überlagern von Bildinformationen, die sich auf die Referenzoberfläche (9) beziehen, aus der NIR-Kamera (5) und dem RGB-Sensor (6).

2. Verfahren nach Anspruch 1, wobei das Verfahren ferner umfasst:
Definieren eines ersten Bilds der Straßenoberfläche (3) mittels der durch die NIR-Kamera (5) bereitgestellten Informationen;
Definieren eines zweiten Bilds der Straßenoberfläche (3) mittels der durch den RGB-Sensor (6) bereitgestellten Informationen; und
Definieren eines kombinierten Bilds durch Überlagern des ersten und des zweiten Bilds.

3. Verfahren nach Anspruch 1 oder 2, wobei das Verfahren ferner umfasst:
Bereitstellen des ersten Bilds mittels erfasster Informationen bezüglich Strahlung, die von der Straßenoberfläche (3) innerhalb eines vorbestimmten Wellenlängenintervalls reflektiert wird.

4. Verfahren nach einem der vorstehenden Ansprüche, wobei das Verfahren ferner umfasst:
Bereitstellen des zweiten Bilds mittels erfasster Informationen bezüglich Rändern und Konturen und ähnlichen visuellen Eigenschaften, die sich auf die Straßenoberfläche (3) beziehen.

5. Verfahren nach Anspruch 1 oder 2, wobei das Verfahren ferner umfasst:
Modellieren von Laserlicht von der Lichtquelle (4) in Form entweder eines Laserlichtpunkts oder einer Laserlinie.

6. Verfahren nach einem der vorstehenden Ansprüche, wobei das Verfahren ferner umfasst:
Bestimmen eines Straßenoberflächenzustands, der aus mindestens einem der Folgenden ausgewählt ist:
- einer trockenen und nicht abgedeckte Straßenoberfläche (3);
- einer Straßenoberfläche (3), die mit Wasser bedeckt ist;
- einer Straßenoberfläche (3), die mit Schnee abgedeckt ist; und
- eine Straßenoberfläche (3), die mit Eis bedeckt ist.

7. Verfahren nach einem der vorstehenden Ansprüche, ferner umfassend:
Identifizieren, mittels der Bilddaten, eines oder mehrerer der folgenden Straßenflächenabschnitte (3a, 3b, 3c, 3d, 3e):
eine linke Fahrbahnseite (3a);
eine rechte Fahrbahnseite (3b);
eine linke Radspur (3c);
eine rechte Radspur (3c); und
einen mittleren Straßenabschnitt (3e).

8. Verfahren nach einem der vorstehenden Ansprüche, ferner umfassend:
Bestimmen des Straßenzustands durch Verwenden von Messungen weiterer Betriebsbedingungen, die sich auf das Fahrzeug (1) beziehen.

9. Anordnung zum Bestimmen einer Klassifizierung eines Zustands einer Straßenoberfläche (3) für Fahrzeug(1)-Verkehr und innerhalb einer Referenzoberfläche (9) der Straßenoberfläche (3) vor dem Fahrzeug (1), die Anordnung umfassend mindestens eine Lichtquelle (4), die auf dem Fahrzeug (1) positioniert ist und zum Beleuchten der Referenzoberfläche (9) konfiguriert ist, einen Sensor (5) zum Erfassen von Licht, das von der Referenzoberfläche (9) reflektiert wird; wobei die Anordnung konfiguriert ist, um die Klassifizierung des Zustands der Straßenoberfläche (3) durch Analysieren erfasster Informationen, die sich auf die Referenzoberfläche (9) beziehen zu bestimmen;
**dadurch gekennzeichnet, dass** die Anordnung ferner eine Laserlichteinheit (4) zum Beleuchten der Referenzoberfläche (9), eine NIR-Kamera (5) zum Bereitstellen von Bildinformationen, die sich auf die Referenzoberfläche (9) beziehen, durch Erfassen des reflektierten Lichts, einen RGB-Sensors (6) zum Bereitstellen weiterer Bildinformationen, die sich auf die Referenzoberfläche (9) beziehen, durch Abtasten der Referenzoberfläche (9) mittels eines RGB-Sensors (6); und eine Steuereinheit (7) zum Bestimmen der Klassifizierung der Straßenoberfläche (3) durch Überlagern von Bildinformationen, die sich auf die Referenzoberfläche (9) beziehen, aus der NIR-Kamera (5) und dem RGB-Sensor (6), umfasst.

10. Fahrzeug (1), umfassend eine Anordnung für die Klassifizierung eines Zustands einer Straßenoberfläche (3) nach Anspruch 9.

## Revendications

1. Procédé permettant de déterminer une classification d'une condition d'une surface routière (3) pour la circulation d'un véhicule (1), ledit procédé comprenant :
la définition d'une surface de référence (9) de ladite surface routière (3) en avant du véhicule (1) ;
l'illumination de ladite surface de référence (9) avec au moins une source de lumière (4) positionnée sur le véhicule (1) ;
la détection de lumière qui est réfléchie par ladite surface de référence (9) ; et la détermination de ladite classification de la condition de la surface routière (3) en analysant des informations détectées se rapportant à ladite surface de référence (9) ;
**caractérisé en ce que** le procédé comprend les étapes suivantes :
illumination de ladite surface de référence (9) au moyen de lumière laser ;
fourniture d'informations d'image se rapportant à ladite surface de référence (9) en détectant ladite lumière réfléchie, au moyen d'une caméra NIR (5) ;
fourniture d'informations d'image supplémentaires se rapportant à ladite surface de référence (9) par balayage de ladite surface de référence (9) au moyen d'un capteur RVB (6) ; et
détermination de ladite classification de la surface routière (3) par superposition des informations d'image se rapportant à ladite surface de référence (9) provenant de ladite caméra NIR (5) et dudit capteur RVB (6).

2. Procédé selon la revendication 1, ledit procédé comprenant en outre :
la définition d'une première image de ladite surface routière (3) au moyen des informations fournies par ladite caméra NIR (5) ;
la définition d'une seconde image de ladite surface routière (3) au moyen des informations fournies par ledit capteur RVB (6) ; et
la définition d'une image combinée par superposition des première et seconde images.

3. Procédé selon la revendication 1 ou 2, ledit procédé comprenant en outre :
la fourniture de ladite première image au moyen d'informations détectées concernant un rayonnement réfléchi par la surface routière (3) au sein d'un intervalle de longueur d'onde prédéterminé.

4. Procédé selon l'une quelconque des revendications précédentes, ledit procédé comprenant en outre :
la fourniture de ladite seconde image au moyen d'informations détectées concernant des bords et contours et des propriétés visuelles similaires se rapportant à la surface routière (3).

5. Procédé selon la revendication 1 ou 2, ledit procédé comprenant en outre :
la modélisation de lumière laser provenant de ladite source de lumière (4) sous la forme soit d'un point lumineux laser soit d'une ligne laser.

6. Procédé selon l'une quelconque des revendications précédentes, ledit procédé comprenant en outre
la détermination d'une condition de surface routière choisie parmi au moins l'une des suivantes :
- une surface routière sèche et non recouverte (3) ;
- une surface routière (3) qui est recouverte d'eau ;
- une surface routière (3) qui est recouverte de neige ; et
- une surface routière (3) qui est recouverte de verglas.

7. Procédé selon l'une quelconque des revendications précédentes, comprenant en outre :
l'identification, au moyen desdites données d'image, d'un ou plusieurs des tronçons routiers suivants (3a, 3b, 3c, 3d, 3e) :
une voie de gauche (3a) ;
une voie de droite (3b) ;
une trajectoire de roue gauche (3c) ;
une trajectoire de roue droite (3c) ; et
un tronçon routier central (3e).

8. Procédé selon l'une quelconque des revendications précédentes, comprenant en outre :
la détermination de ladite condition de route en utilisant des mesures de conditions opérationnelles supplémentaires se rapportant audit véhicule (1).

9. Agencement permettant de déterminer une classification d'une condition d'une surface routière (3) pour la circulation d'un véhicule (1) et au sein d'une surface de référence (9) de ladite surface routière (3) en avant du véhicule (1), ledit agencement comprenant au moins une source de lumière (4) positionnée sur ledit véhicule (1) et étant conçue pour illuminer ladite surface de référence (9) ; un capteur (5) permettant de détecter de la lumière qui est réfléchie par ladite surface de référence (9) ; ledit agencement étant configuré pour déterminer ladite classification de la condition de la surface routière (3) en analysant des informations détectées se rapportant à ladite surface de référence (9) ;
**caractérisé en ce que** ledit agencement comprend en outre une unité de lumière laser (4) permettant d'illuminer ladite surface de référence (9), une caméra NIR (5) permettant de fournir des informations d'image se rapportant à ladite surface de référence (9) en détectant ladite lumière réfléchie, un capteur RVB (6) permettant de fournir des informations d'image supplémentaires se rapportant à ladite surface de référence (9) par balayage de ladite surface de référence (9) au moyen d'un capteur RVB (6) ; et une unité de commande (7) permettant de déterminer ladite classification de la surface routière (3) par superposition d'informations d'image se rapportant à ladite surface de référence (9) provenant de ladite caméra NIR (5) et dudit capteur RVB (6).

10. Véhicule (1) comprenant un agencement destiné à la classification d'une condition d'une surface routière (3) selon la revendication 9.
